# FASCICULE DE BREVET EUROPEEN

(11) **EP 3 807 109 B1**
(45) Date de publication et mention de la délivrance du brevet: **08.06.2022**
(21) Numéro de dépôt: 19745691.6
(22) Date de dépôt: 18.06.2019
(51) Int. Cl.: B60H 1/32, F25B 49/02, F25B 41/40, F25B 41/20, F25B 40/00, F25B 5/02, B60H 1/00

(54) **SYSTEME DE TRAITEMENT THERMIQUE POUR VEHICULE**
WÄRMEBEHANDLUNGSSYSTEM FÜR FAHRZEUGE
VEHICLE HEAT TREATMENT SYSTEM

(30) Priorité: 18.06.2018 FR 1855307
(43) Date de publication de la demande: 21.04.2021
(73) Titulaire: VALEO SYSTEMES THERMIQUES, 78320 Le Mesnil Saint-Denis (FR)
(72) Inventeur: BENOUALI, Jugurtha, 78322 LE MESNIL SAINT-DENIS CEDEX (FR)
(74) Mandataire: Valeo Systèmes Thermiques
(86) Numéro de dépôt international: PCT/FR2019/051481
(87) Numéro de publication internationale: WO 2019/243726

(56) Documents cités:
- WO-A1-2014/040854
- DE-A1-102013 206 626
- DE-A1-102015 218 825
- DE-B3-102016 004 999
- FR-A1- 3 028 016

## Description

Le domaine de la présente invention est celui des systèmes de traitement thermique exploités pour chauffer ou refroidir une enceinte ou un composant d'un véhicule, notamment pour un véhicule automobile.

Les véhicules automobiles sont couramment équipés d'un circuit de fluide réfrigérant utilisé pour chauffer ou refroidir différentes zones ou différents composants du véhicule. Il est notamment connu, notamment du document FR 3 028 016 A1, d'utiliser ce circuit de fluide réfrigérant pour traiter thermiquement un flux d'air envoyé dans l'habitacle du véhicule équipé d'un tel circuit.

Dans une autre application de ce circuit, comme dans le document DE 10 2013 206626 A1, il est connu de l'utiliser pour refroidir un dispositif de stockage d'énergie électrique du véhicule, ce dernier étant utilisé pour fournir une énergie à un moteur électrique capable de mettre en mouvement le véhicule. Le circuit de fluide réfrigérant fournit ainsi l'énergie capable de refroidir le dispositif de stockage d'énergie électrique pendant son utilisation en phases de roulage.

Le circuit de fluide réfrigérant connu à ce jour et capable de remplir une fonction de chauffage de l'habitacle, une fonction de refroidissement de l'habitacle, une fonction de récupération d'énergie et une fonction de traitement thermique d'un dispositif de stockage d'énergie électrique du véhicule, ce qui est complexe et fait appel à de nombreuses pièces.

A titre d'exemple, ce circuit de fluide réfrigérant connu utilise de nombreuses vannes et au moins un accumulateur disposé immédiatement en amont du dispositif de compression. Or, l'utilisation de ces vannes implique un routage du circuit particulièrement compliqué, ce qui forme un premier inconvénient du circuit connu.

Un deuxième inconvénient réside dans l'utilisation de l'accumulateur. En effet, ce composant est particulièrement volumineux, ce qui complique son installation sur le véhicule et grève le coût du circuit de fluide réfrigérant. Par ailleurs, l'utilisation d'un accumulateur empêche la mise en place d'un compromis de performances entre les quatre modes de fonctionnement évoqués ci-dessus.

L'invention s'inscrit dans ce contexte et propose une solution technique qui comporte un nombre de pièces et un routage du circuit restreints et dont l'encombrement consécutif à son installation dans le véhicule et son coût de fabrication sont maitrisés, tout en offrant la possibilité de remplir au moins quatre fonctions parmi lesquelles on trouve la fonction de chauffage de l'habitacle, la fonction de refroidissement de l'habitacle, la fonction de récupération d'énergie sur un composant de la chaîne de traction électrique du véhicule et la fonction de traitement thermique d'un composant de la chaîne de traction électrique du véhicule.

L'invention , définie dans la revendication 1, a donc pour objet un système de traitement thermique pour véhicule, comprenant un circuit de fluide réfrigérant et une boucle de liquide caloporteur, la boucle de liquide caloporteur comprenant au moins un échangeur thermique configuré pour dissiper des calories dans un flux d'air, le circuit de fluide réfrigérant comprenant, dans cet ordre et selon un sens de circulation du fluide réfrigérant dans le circuit de fluide réfrigérant, au moins un dispositif de compression, un premier échangeur de chaleur qui couple thermiquement la boucle de liquide caloporteur avec le circuit de fluide réfrigérant, un dispositif d'accumulation du fluide réfrigérant, une première passe d'un échangeur de chaleur interne, un organe de détente, un deuxième échangeur de chaleur agencé pour être traversé par un flux d'air extérieur à un habitacle du véhicule et une seconde passe de l'échangeur de chaleur interne.

Le fluide réfrigérant est par exemple un fluide sous-critique, tel que celui connu sous la référence R134a ou R1234yf. Le circuit de fluide réfrigérant selon l'invention est un circuit fermé qui met en œuvre un cycle thermodynamique, en particulier à compression de vapeur.

Le dispositif de compression est par exemple un compresseur, et l'invention trouve une application toute particulière lorsque le compresseur est un compresseur électrique à cylindrée fixe et à vitesse variable. Il est ainsi possible de contrôler la puissance thermique du circuit de fluide réfrigérant.

Le premier échangeur de chaleur forme une zone d'échange thermique entre le fluide réfrigérant et le liquide caloporteur. Il s'agit un échangeur qui comprend un premier compartiment traversé par le fluide réfrigérant et un second compartiment emprunté par le liquide caloporteur, les deux compartiments étant organisés pour qu'un transfert de calories intervienne en eux.

Le dispositif d'accumulation est avantageusement une bouteille, notamment déshydratante.

Selon l'invention, les éléments du circuit de fluide réfrigérant sont disposés les uns après les autres, et selon un ordre précis. C'est cette disposition, qui en fonction du mode de fonctionnement envisagé, permet d'atteindre des performances thermiques de premier ordre, à un coût réduit.

De manière avantageuse, l'organe de détente est configuré pour prendre au moins une position inopérante à l'égard du fluide réfrigérant. Cette position correspond à des modes de fonctionnement où il est nécessaire de refroidir un flux d'air intérieur envoyé dans l'habitacle, ou encore quand il faut refroidir un composant de la chaîne de traction électrique du véhicule. En revanche, l'organe de détente génère une perte de charge dans un mode tel que la pompe à chaleur.

Selon l'invention, le circuit de fluide réfrigérant comprend une branche principale et au moins une première branche parallèle à la branche principale, cette branche principale comprenant au moins le dispositif de compression, le premier échangeur de chaleur, le dispositif d'accumulation du fluide réfrigérant, la première passe de l'échangeur de chaleur interne, l'organe de détente, le deuxième échangeur de chaleur et la seconde passe de l'échangeur de chaleur interne, tandis que la première branche comprend au moins un premier dispositif de détente et un troisième échangeur de chaleur agencé pour être traversé par un flux d'air intérieur envoyé dans l'habitacle du véhicule. Le fluide peut aussi circuler successivement au moins dans la branche principale, puis dans la première branche, en fonction des modes de fonctionnement détaillés plus bas. Cette première branche est ainsi dédiée au refroidissement du flux d'air envoyé dans l'habitacle.

Avantageusement, on notera que le circuit de fluide réfrigérant comprend au moins une deuxième branche parallèle à la branche principale, la deuxième branche comprenant un deuxième dispositif de détente et un quatrième échangeur de chaleur agencé pour refroidir un fluide additionnel. Cette deuxième branche est ainsi dédiée au refroidissement d'un composant de la chaîne de traction électrique du véhicule, par exemple son moteur de déplacement, son dispositif de stockage d'énergie électrique ou son module électronique de puissance.

De manière avantageuse, la branche principale comprend au moins une vanne principale configurée pour arrêter une circulation de fluide réfrigérant dans la branche principale.

Selon un autre exemple de réalisation, le circuit de fluide réfrigérant comprend au moins une vanne trois voies disposée en un point de séparation de la branche principale et une canalisation disposée en parallèle de la branche principale.

Avantageusement, le premier dispositif de détente et/ou le deuxième dispositif de détente évoqués plus haut sont configurés pour prendre au moins une position qui empêche toute circulation de fluide réfrigérant vers le troisième échangeur de chaleur, respectivement vers le quatrième échangeur de chaleur. Chaque branche comprend ainsi un échangeur de chaleur disposé en aval d'un dispositif de détente, de manière à ce que le troisième échangeur de chaleur et/ou le quatrième échangeur de chaleur fonctionne en tant qu'évaporateur.

Selon une réalisation intéressante, l'échangeur de chaleur interne de la branche principale est un échangeur de chaleur interne principal, le circuit de fluide réfrigérant comprenant un échangeur de chaleur interne secondaire commun à la première branche et à la deuxième branche.

Selon un autre exemple, l'échangeur de chaleur interne de la branche principale est un échangeur de chaleur interne principal et la première branche comprend un premier échangeur de chaleur interne. Dans un tel cas, le premier échangeur de chaleur interne est actif uniquement à l'égard du fluide réfrigérant qui est envoyé vers le troisième échangeur de chaleur.

Selon un autre exemple alternatif au paragraphe précédent, l'échangeur de chaleur de la branche principale est un échangeur de chaleur interne principal et la deuxième branche comprend un deuxième échangeur de chaleur interne. Dans un tel cas, le deuxième échangeur de chaleur interne est actif uniquement à l'égard du fluide réfrigérant qui est envoyé vers le quatrième échangeur de chaleur.

Bien entendu, l'invention couvre le cas où le circuit de fluide réfrigérant comprend le circuit principal, la première branche et la deuxième branche étant chacune équipée d'un échangeur de chaleur interne distinct, appelé premier échangeur de chaleur interne quand il est affecté à la première branche, et deuxième échangeur de chaleur interne quand il est affecté à la deuxième branche.

Selon un aspect optionnel de l'invention, la branche principale comprend une vanne secondaire configurée pour arrêter une circulation de fluide réfrigérant dans la branche principale, la vanne secondaire étant disposée entre le deuxième échangeur de chaleur et la seconde passe de l'échangeur de chaleur interne. Une telle vanne secondaire prend une position fermée en mode de refroidissement de l'habitacle ou du composant de la chaîne de traction électrique, et une position ouverte en mode pompe à chaleur.

Selon un exemple particulier de réalisation, le circuit de fluide réfrigérant comprend une conduite qui contourne la première passe de l'échangeur de chaleur interne, l'organe de détente, le deuxième échangeur de chaleur et la seconde passe de l'échangeur de chaleur interne, la conduite comprenant au moins un cinquième échangeur de chaleur agencé pour être traversé par le flux d'air extérieur à l'habitacle du véhicule. Cette conduite est utilisée pour réduire les pertes de charge de certains modes de fonctionnement.

Selon cet exemple, le circuit de fluide réfrigérant peut comprendre une deuxième vanne disposée dans la conduite et configurée pour arrêter une circulation de fluide réfrigérant dans la conduite.

Selon l'invention, la première branche est raccordée à la branche principale en un point, dit premier point de raccordement, compris entre le deuxième échangeur de chaleur et l'échangeur de chaleur interne. La première branche est également raccordée à un autre point, appelé troisième point de raccordement, où la première branche se raccorde à la branche principale.

Grâce à l'agencement de la première branche, le deuxième échangeur de chaleur peut servir d'évaporateur en mode pompe à chaleur en coopération avec le premier échangeur de chaleur qui sert lui de condenseur. Toujours grâce à cet agencement, le deuxième échangeur de chaleur peut aussi servir d'échangeur sous-refroidisseur, aussi bien en mode climatisation en coopération avec le troisième échangeur de chaleur qu'en mode refroidissement batterie en coopération avec le quatrième échangeur de chaleur. Ainsi, selon l'invention, un seul et unique échangeur, le deuxième échangeur de chaleur, peut assurer toutes ces fonctions tandis qu'au moins deux échangeurs distincts sont nécessaires pour réaliser lesdites fonctions dans les systèmes selon l'art antérieur.

De manière avantageuse, la première branche comprend au moins une passe de l'échangeur de chaleur interne, notamment de l'échangeur de chaleur interne commun à la première branche et à la deuxième branche.

De manière avantageuse, l'échangeur thermique de la boucle de liquide caloporteur est un radiateur agencé pour être traversé par le flux d'air extérieur à l'habitacle du véhicule.

De manière alternative, l'échangeur thermique de la boucle de liquide caloporteur est un aérotherme agencé pour être traversé par le flux d'air intérieur envoyé dans l'habitacle du véhicule.

L'invention couvre bien entendu une combinaison de ces moyens, où la boucle de liquide caloporteur comprend un premier échangeur thermique agencé pour être traversé par le flux d'air extérieur à l'habitacle du véhicule, ainsi qu'un deuxième échangeur thermique agencé pour être traversé par le flux d'air intérieur envoyé dans l'habitacle du véhicule. Dans un tel cas, le premier échangeur thermique est un radiateur, tandis que le deuxième échangeur thermique est un aérotherme.

D'autres caractéristiques, détails et avantages de l'invention ressortiront plus clairement à la lecture de la description donnée ci-après à titre indicatif en relation avec des dessins dans lesquels :
- la figure 1 est une vue schématique d'un système de traitement thermique, dans un premier mode de réalisation ne relevant pas de l'invention et présent à titre illustratif,
- la figure 2 est une vue schématique du système de traitement thermique, dans un deuxième mode de réalisation,
- la figure 3 est une vue schématique du système de traitement thermique, dans un troisième mode de réalisation,
- les figures 4 à 5 illustrent des variantes de réalisation applicables aux systèmes de traitement thermique des figures 1, 2, 3 ou 11,
- les figures 6 à 10 montrent le système de traitement thermique objet de la figure 3 exploité selon différents modes de fonctionnement,
- la figure 11 illustre un quatrième mode de réalisation du système de traitement thermique objet de l'invention.

Il faut tout d'abord noter que les figures exposent l'invention de manière détaillée pour mettre en œuvre l'invention, lesdites figures pouvant bien entendu servir à mieux définir l'invention, le cas échéant. Ces figures sont des représentations schématiques qui illustrent comment est réalisé le système de traitement thermique, ce qui le compose et comment les fluides circulent en son sein. En particulier, le système de traitement thermique comprend d'un côté un circuit de fluide réfrigérant et une boucle de liquide caloporteur, un échangeur de chaleur étant traversé par ces deux fluides.

Le circuit de fluide réfrigérant comprend principalement un dispositif de compression du fluide réfrigérant, des échangeurs de chaleurs, des organes de détentes, des canalisations reliant chacun de ces composants, et des vannes ou clapet. Le circuit peut également être placé sous la dépendance d'un contrôleur qui agit sur certains de ces composants.

Les termes amont et aval employés dans la description qui suit se réfèrent au sens de circulation du fluide considéré, c'est-à-dire le fluide réfrigérant, le liquide caloporteur, un flux d'air intérieur envoyé vers un habitacle du véhicule ou un flux d'air extérieur à cet habitacle du véhicule.

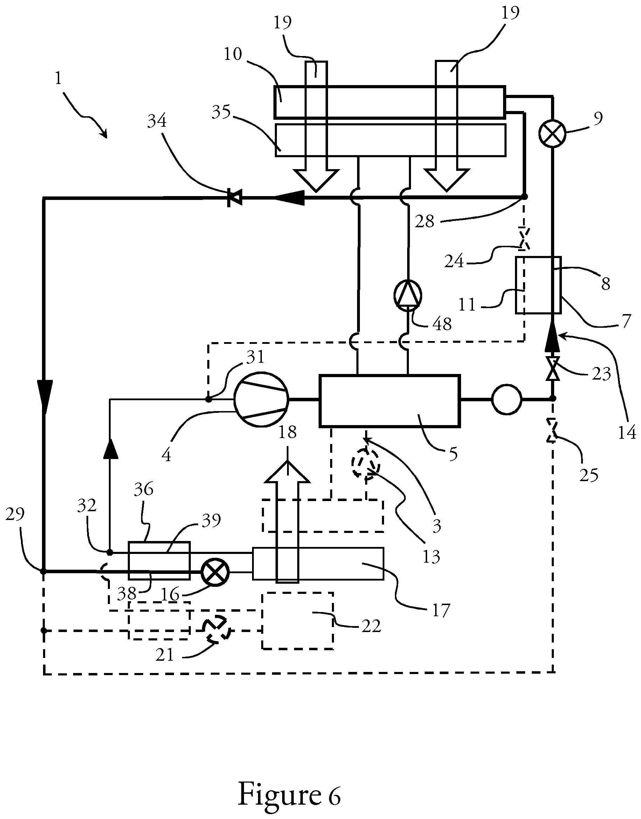

Dans les figures 6 à 10, le fluide réfrigérant est symbolisé par une flèche qui illustre le sens de circulation de ce dernier dans la canalisation considérée. Les traits pleins illustrent une portion de circuit où le fluide réfrigérant circule, tandis que les traits pointillés montrent une absence de circulation du fluide réfrigérant. Les traits fort illustrent le fluide réfrigérant dans un état de haute pression et haute température, tandis que les traits fins illustrent ce fluide réfrigérant à l'état de basse pression et basse température.

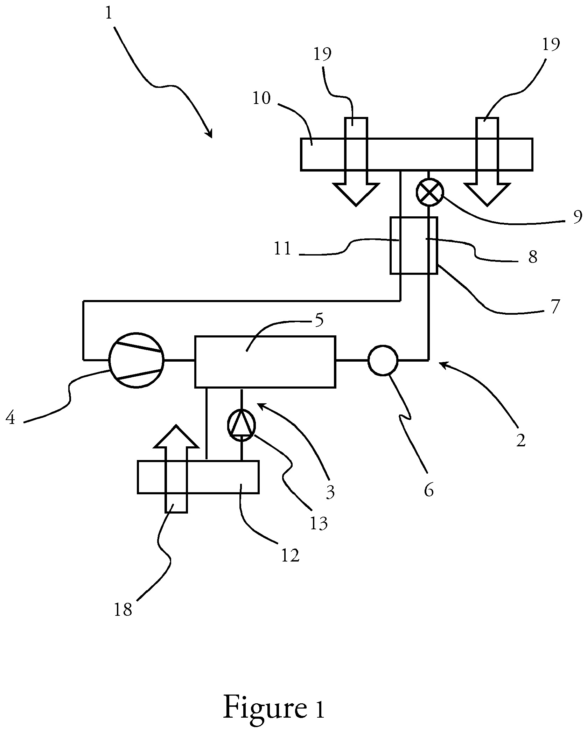

La figure 1 montre ainsi un système de traitement thermique 1 qui comporte un circuit de fluide réfrigérant 2 à l'intérieur duquel un fluide réfrigérant circule, ainsi qu'une boucle de liquide caloporteur 3, dans laquelle un liquide caloporteur évolue.

Ce circuit de fluide réfrigérant 2 est une boucle fermée où le fluide réfrigérant est mis en circulation par un dispositif de compression 4. On notera que ce dispositif de compression 4 peut prendre la forme d'un compresseur électrique, c'est-à-dire un compresseur qui comprend un mécanisme de compression, un moteur électrique et éventuellement un contrôleur. Le mécanisme de rotation est mis en rotation par le moteur électrique dont la vitesse de rotation est placée sous la dépendance du contrôleur, celui-ci pouvant être externe ou interne au dispositif de compression concerné.

Selon le premier mode de réalisation présenté en figure 1, le circuit de fluide réfrigérant 2 comprend, dans cet ordre et selon le sens de circulation du fluide réfrigérant en son sein, au moins le dispositif de compression 4 raccordé par une canalisation à un premier échangeur de chaleur 5 qui couple thermiquement la boucle de liquide caloporteur 3 avec le circuit de fluide réfrigérant 2. Ce premier échangeur de chaleur 5 est raccordé par une canalisation à un dispositif d'accumulation 6 du fluide réfrigérant. Ce dispositif d'accumulation 6 est ainsi disposé immédiatement en aval du premier échangeur de chaleur 5, et il peut par exemple prendre la forme d'une bouteille déshydratante.

Ce dispositif d'accumulation 6 est raccordé directement à un échangeur de chaleur interne 7, en particulier à une première passe 8 de cet échangeur de chaleur interne 7. Cette première passe 8 de l'échangeur de chaleur interne 7 est raccordée directement par une canalisation à un organe de détente 9, un tel organe présentant au moins deux fonctions : une première visant à générer une perte de charge pour réaliser une détente du fluide réfrigérant et une deuxième où l'organe de détente 9 est inopérant, c'est-à-dire passant sans générer de perte de charge.

L'organe de détente 9 est raccordé directement via une canalisation à un deuxième échangeur de chaleur 10 agencé pour être traversé par un flux d'air extérieur 19 à un habitacle du véhicule. En pratique, un tel deuxième échangeur de chaleur 10 est disposé par exemple en face avant du véhicule, de manière à être exposé au flux d'air extérieur généré par le déplacement du véhicule et/ou par l'activation d'un groupe moto-ventilateur situé en face avant du véhicule.

Le deuxième échangeur de chaleur 10 est raccordé directement via une canalisation à l'échangeur de chaleur interne 7, notamment à une seconde passe 11 de l'échangeur de chaleur interne 7. Le fluide réfrigérant qui circule dans la première passe 8 échange des calories avec le fluide réfrigérant qui circule dans la seconde passe 11.

Cette seconde passe 11 est raccordée directement via une canalisation au dispositif de compression 4, où le cycle thermodynamique peut à nouveau prendre place.

La boucle de liquide caloporteur 3 comprend de son côté le premier échangeur de chaleur 5 qui raccordé par des canalisations à au moins un échangeur thermique 12 configuré pour dissiper des calories dans un flux d'air. La boucle de liquide caloporteur 3 comprend également au moins une pompe 13 qui met en mouvement le liquide caloporteur de sorte que celui-ci circule dans le premier échangeur de chaleur 5 et dans l'échangeur thermique 12.

Le premier échangeur de chaleur 5 est un échangeur fluide réfrigérant/liquide caloporteur, où un transfert de calories peut être opéré entre l'un et l'autre de ces fluides.

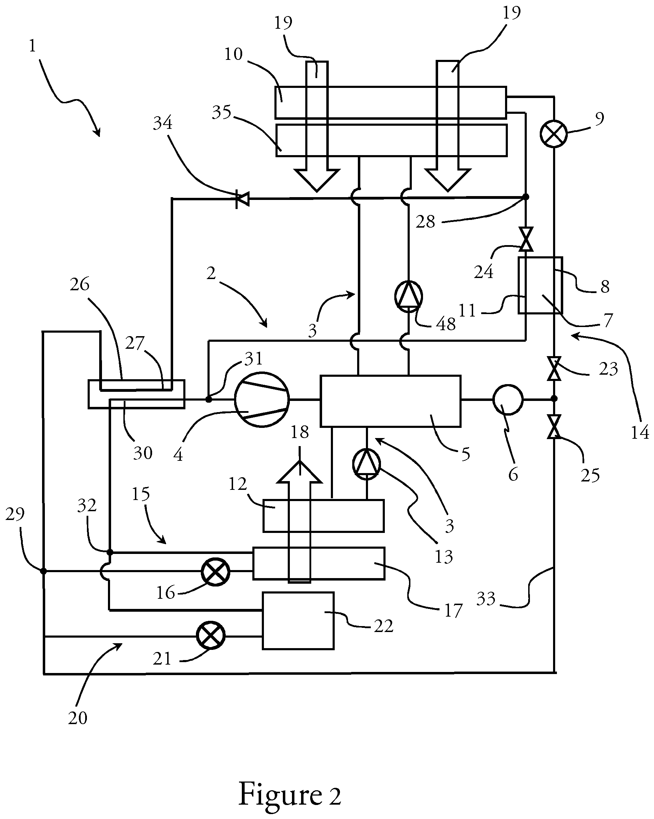

La figure 2 illustre le système de traitement thermique dans un deuxième mode de réalisation, ce dernier faisant usage du système de traitement thermique 1 tel que décrit en figure 1. C'est ainsi qu'on se reportera à la description de la figure 1 pour sa mise en œuvre, les composants supplémentaires étant détaillés dans ce qui suit.

Les composants listés dans la description de la figure 1 sont rassemblés dans une branche principale 14 du circuit de fluide réfrigérant 1. C'est ainsi que la branche principale 14 comprend le dispositif de compression 4, le premier échangeur de chaleur 5, le dispositif d'accumulation 6 du fluide réfrigérant, la première passe 8 de l'échangeur de chaleur interne 7, l'organe de détente 9, le deuxième échangeur de chaleur 10 et la seconde passe 11 de l'échangeur de chaleur interne 7.

Le circuit de fluide réfrigérant 2 selon le deuxième mode de réalisation comprend une première branche 15 qui est agencée au moins en partie en parallèle de la branche principale 14, d'un point de vue fluidique. Cette première branche 15 comprend notamment au moins un premier dispositif de détente 16 et un troisième échangeur de chaleur 17 agencé pour être traversé par un flux d'air intérieur 18 envoyé dans l'habitacle du véhicule.

La première branche 15 est raccordée à la branche principale 14 au niveau d'un premier point de raccordement 28 disposé entre une sortie du deuxième échangeur de chaleur 10 et une entrée de la seconde passe 11 de l'échangeur de chaleur interne 7 qui fait partie de la branche principale 14. La première branche 15 est par ailleurs raccordée à un troisième point de raccordement 31 situé sur la branche principale 14 entre une sortie de la seconde passe 11 de l'échangeur de chaleur interne 7 de la branche principale 14 et une entrée du dispositif de compression 4.

Grâce à l'agencement de la première branche 15, le deuxième échangeur de chaleur 10 peut servir d'évaporateur en mode pompe à chaleur en coopération avec le premier échangeur de chaleur 5 qui sert lui de condenseur. Toujours grâce à cet agencement, le deuxième échangeur de chaleur 10 peut aussi servir d'échangeur sous-refroidisseur, aussi bien en mode climatisation en coopération avec le troisième échangeur de chaleur 17 qu'en mode refroidissement batterie en coopération avec le quatrième échangeur de chaleur 22. Ainsi, selon l'invention, un seul et unique échangeur, le deuxième échangeur de chaleur 10, peut assurer toutes ces fonctions tandis qu'au moins deux échangeurs distincts sont nécessaires pour réaliser lesdites fonctions dans les systèmes selon l'art antérieur.

Une telle disposition de la première branche 15 qui contourne la seconde passe 11 de l'échangeur de chaleur interne 7 de la branche principale 14 évite que le fluide réfrigérant ne circule dans la seconde passe 11 de l'échangeur de chaleur interne 7 pour les modes de fonctionnement de refroidissement. On limite ainsi les pertes de charge.

Tel qu'illustré que le mode de réalisation de la figure 2, la première branche 15 peut comporter un échangeur de chaleur interne secondaire 26 dédié au fluide réfrigérant circulant au moins dans la première branche 15.

Selon cet exemple de réalisation, le premier dispositif de détente 16 est un détendeur à commande électronique qui comprend au moins une fonction d'arrêt total de la circulation de fluide réfrigérant à son travers. Ainsi, le premier dispositif de détente 16 selon l'invention est configuré pour prendre au moins une position dans laquelle il bloque toute circulation de fluide réfrigérant vers le troisième échangeur de chaleur 17 et des positions où il génère une perte de charge sur le fluide réfrigérant. On notera que ce troisième échangeur de chaleur 17 est utilisé en tant qu'évaporateur pour refroidir le flux d'air intérieur 18 qui est envoyé dans l'habitacle du véhicule.

Le circuit de fluide réfrigérant 2 illustré sur la figure 2 comprend également une deuxième branche 20 parallèle à au moins une partie de la première branche 15, d'un point de vue fluidique. De manière plus précise, la deuxième branche 20 est en parallèle du premier dispositif de détente 16 et du troisième échangeur de chaleur 17. Cette deuxième branche 20 est ainsi raccordée en un deuxième point de raccordement 29 et en un quatrième point de raccordement 32.

La disposition et les composants constitutifs de la deuxième branche 20 sont similaires à ceux de la première branche 15. C'est ainsi que la deuxième branche 20 comprend un deuxième dispositif de détente 21 et un quatrième échangeur de chaleur 22 agencé pour refroidir un fluide additionnel. Comme pour le premier dispositif de détente 16, le deuxième dispositif de détente 21 est un détendeur à commande électronique qui comprend au moins une fonction d'arrêt total de la circulation de fluide réfrigérant à son travers. Ainsi, le deuxième dispositif de détente 21 selon l'invention est configuré pour prendre au moins une position dans laquelle il bloque toute circulation de fluide réfrigérant vers le quatrième échangeur de chaleur 22 et des positions où il génère une perte de charge sur le fluide réfrigérant qui se dirige vers ce quatrième échangeur de chaleur 22. On notera que ce quatrième échangeur de chaleur 22 est utilisé en tant qu'évaporateur pour refroidir un fluide additionnel qui est couplé thermiquement avec au moins un composant d'une chaîne de traction électrique du véhicule, notamment avec le dispositif de stockage d'énergie électrique.

La branche principale 14 est complétée par l'ajout d'une vanne principal 23 et d'une vanne secondaire 24. La vanne principale 23 est configurée pour arrêter une circulation de fluide réfrigérant dans la branche principale 14, et elle est par exemple localisée sur cette dernière entre le dispositif d'accumulation 6 et la première passe 8 de l'échangeur de chaleur interne 7. La vanne secondaire 24 est quant à elle disposée entre le premier point de raccordement 28 et la seconde passe 11 de l'échangeur de chaleur interne 7.

La figure 2 montre également une canalisation 33 comprenant une première vanne 25 configurée pour arrêter une circulation de fluide réfrigérant dans cette canalisation 33 disposée en parallèle de la première branche 15. Ce faisant, cette première vanne 25 interrompt aussi la circulation de fluide réfrigérant dans la deuxième branche 20, cette canalisation 33 étant raccordée de sorte à alimenter en fluide réfrigérant la première branche 15 et/ou la deuxième branche 20.

Dans ce mode de réalisation illustré par la figure 2, le circuit de fluide réfrigérant 2 comprend deux échangeurs de chaleur interne 7, 26. L'échangeur de chaleur interne 7 qui fait partie de la branche principale 14 est appelé dans ce qui suit : échangeur de chaleur interne principal 7, en référence à sa participation à la constitution de la branche principale 14. Selon cette configuration, la première branche 15 comprend un échangeur de chaleur interne secondaire 26 qui opère un échange de chaleur entre deux portions d'une partie commune de la première branche 15 et de la deuxième branche 20 du circuit de fluide réfrigérant 2.

Cet échangeur de chaleur interne secondaire 26 comprend une première passe 27 disposée dans la première branche 15, entre le premier point de raccordement 28 et le deuxième point de raccordement 29, et une seconde passe 30 ménagée entre le troisième point de raccordement 31 et le quatrième point de raccordement 32.

Le premier point de raccordement 28 et le troisième point de raccordement 31 sont les points où la première branche 15 se sépare de la branche principale 14, pour former un sous-circuit disposé au moins en partie en parallèle de la branche principale 14.

Le deuxième point de raccordement 29 et le quatrième point de raccordement 32 sont des points de séparation où la deuxième branche 20 se sépare de la première branche 15 pour être disposée en parallèle de cette dernière.

On comprend donc que l'échangeur de chaleur interne secondaire 26 est commun à la première branche 15 et à la deuxième branche 20, en ce sens que le fluide réfrigérant qui traverse la première passe 27 de l'échangeur de chaleur interne secondaire 26 se sépare en deux quantités qui alimentent chacune la première branche 15 et la deuxième branche 20, cette séparation intervenant après la première passe 27, au niveau du deuxième point de raccordement 29.

Un clapet anti-retour 34 est disposé sur la première branche 15 entre le premier point de raccordement 28 et une entrée de la première passe 27 de l'échangeur de chaleur interne secondaire 26. Ce clapet anti-retour autorise la circulation du fluide réfrigérant depuis la branche principale 14 vers la première branche 15, et interdit toute circulation de fluide réfrigérant dans le sens inverse, c'est-à-dire depuis la première branche 15 vers la branche principale 14.

La boucle de liquide caloporteur 3 comprend ici deux échangeurs thermiques configurés pour dissiper des calories dans un flux d'air, chacun de ces échangeurs thermiques étant disposé dans des portions de boucle distinctes et en parallèle les unes des autres, notamment une première portion et une seconde portion de la boucle de liquide caloporteur. Le premier échangeur thermique 12 est ainsi traversé par le liquide caloporteur et par le flux d'air intérieur 18 envoyé dans l'habitacle. Ce premier échangeur thermique 12 est un aérotherme chargé de chauffer l'habitacle, en conditions froides.

La boucle de liquide caloporteur 3 comprend une portion de boucle dans laquelle on trouve un deuxième échangeur thermique 35, ce dernier étant configuré pour dissiper des calories dans le flux d'air extérieur 19 à l'habitacle. En d'autres termes, ce deuxième échangeur thermique 35 est disposé en face avant du véhicule, à côté du deuxième échangeur de chaleur 10. La fonction de ce deuxième échangeur thermique 35 est de décharger dans le flux d'air extérieur 19 les calories issues du premier échangeur de chaleur 5 et transportées par le liquide caloporteur. A cet égard, le deuxième échangeur thermique 35 est un radiateur.

La portion de la boucle de liquide caloporteur 3 qui comprend le deuxième échangeur thermique 35 comprend également un moyen de mise en circulation 48 du liquide caloporteur en sein de cette portion, de sorte à ce que le liquide caloporteur transporte les calories captées au niveau du premier échangeur de chaleur 5 jusqu'au deuxième échangeur thermique 35, pour les décharger dans le flux d'air extérieur 19.

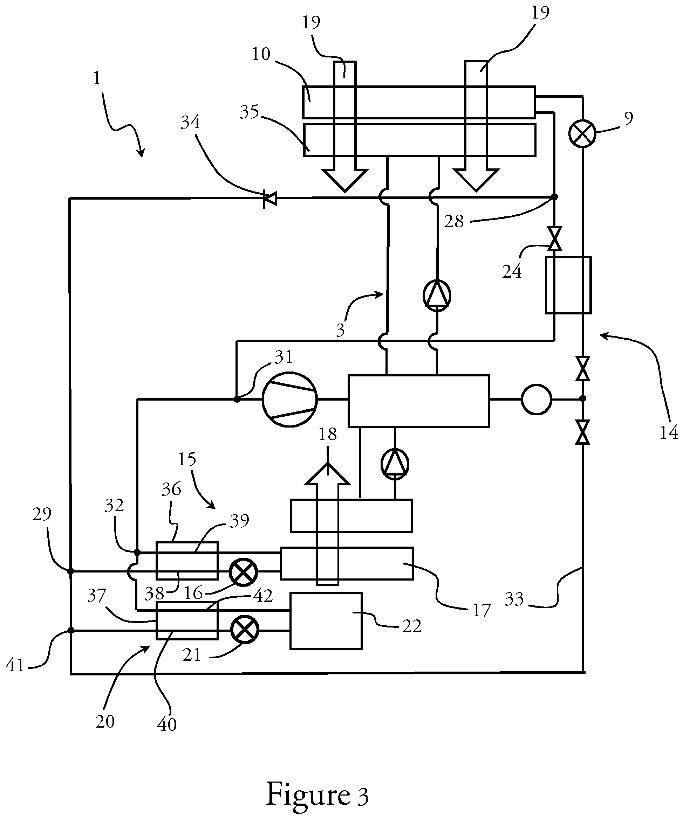

La figure 3 montre un troisième mode de réalisation du système de traitement thermique 1 objet de l'invention. La branche principale 14, la boucle de liquide caloporteur 3 et la canalisation 33 sont identiques à celles décrites en figure 1 ou 2, et on se reportera à la description de cette figure 2 qui s'applique mutatis-mutandis à la figure 3.

Ce troisième mode de réalisation comprend des échangeurs de chaleur interne individuels pour la première branche 15 et pour la deuxième branche 20. La première branche 15 comprend ainsi un premier échangeur de chaleur interne 36, tandis que la deuxième branche 20 comprend un deuxième échangeur de chaleur interne 37 séparé et distinct du premier échangeur de chaleur interne 36.

Le premier échangeur de chaleur interne 36 comprend ainsi une première passe 38 disposée sur le trajet qui relie le deuxième point de raccordement 29 à une entrée du premier dispositif de détente 16. Le premier échangeur de chaleur interne 36 comprend également une seconde passe 39 disposée entre une sortie du troisième échangeur de chaleur 17 et le quatrième point de raccordement 32. On comprend donc que l'échange thermique qui prend place dans le premier échangeur de chaleur interne 36 est dédié au fluide réfrigérant qui alimente et qui provient du troisième échangeur de chaleur 17.

La deuxième branche 20 comprend le deuxième échangeur de chaleur interne 37, et ce dernier comporte une première passe 40 disposée sur le trajet qui relie un cinquième point de raccordement 41 à une entrée du deuxième dispositif de détente 21. Le deuxième échangeur de chaleur interne 37 comprend également une seconde passe 42 disposée entre une sortie du quatrième échangeur de chaleur 22 et le quatrième point de raccordement 32. On comprend donc que l'échange thermique qui prend place dans le deuxième échangeur de chaleur interne 37 est dédié au fluide réfrigérant qui alimente et qui provient du quatrième échangeur de chaleur 22.

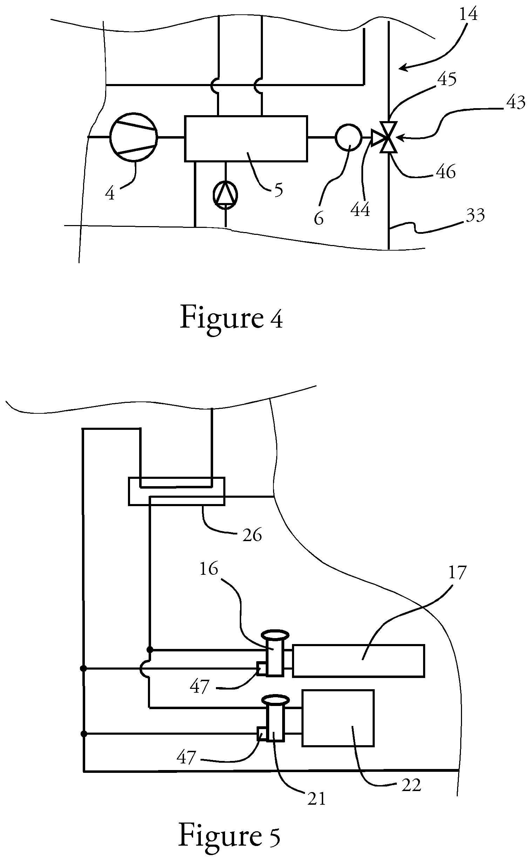

La figure 4 illustre une variante de réalisation transposable à l'un quelconque du deuxième ou troisième mode de réalisation. Le dispositif de compression 4 décharge le fluide réfrigérant chaud dans le premier échangeur de chaleur 5.

Quand ce fluide réfrigérant est débarrassé de ses calories, il entre dans le dispositif d'accumulation 6 disposé judicieusement entre une sortie du premier échangeur de chaleur 5 et une entrée de la première passe de l'échangeur de chaleur interne principal.

La vanne principale 23 et la première vanne 25 sont ici remplacées par une vanne trois voies 43, dont une première voie 44 est raccordée à une sortie du dispositif d'accumulation 6, une deuxième voie 45 est raccordée à la première passe de l'échangeur de chaleur principal et une troisième voie 46 est raccordée à la canalisation 33.

La figure 5 montre une autre variante de réalisation applicable à l'un quelconque du deuxième ou troisième mode de réalisation. Dans le cas présent, c'est l'échangeur de chaleur interne secondaire 26 qui est illustré sur la figure 5, mais on comprend que les modifications exposées ci-dessous sont transposables au mode de réalisation qui exploite le premier échangeur de chaleur interne et le deuxième échangeur de chaleur interne affecté à chacune des première et deuxième branche 15, 20.

Selon cette variante, le premier dispositif de détente 16 et le deuxième dispositif de détente 21 sont des détendeurs thermostatiques à arrêt pilotable. Il s'agit en pratique de détendeur thermostatique, dont une section d'entrée du fluide réfrigérant dépend d'une température de ce fluide réfrigérant en sortie de l'échangeur de chaleur considéré. L'arrêt pilotable de ce détendeur thermostatique est mis en œuvre par une vanne d'arrêt 47 intégrée au détendeur thermostatique, et qui est configurée pour prendre au moins une position qui interdit toute circulation du fluide réfrigérant au travers du détendeur thermostatique à arrêt pilotable, notamment vers l'entrée du troisième échangeur de chaleur 17 ou vers l'entrée du quatrième échangeur de chaleur 22.

La figure 6 prend comme exemple le troisième mode de réalisation. Cette figure illustre un mode de fonctionnement correspondant à un refroidissement du flux d'air 18 envoyé dans l'habitacle.

Le dispositif de compression 4 élève la pression et la température du fluide réfrigérant. Ce fluide réfrigérant chaud est refroidi lors de son passage au sein du premier échangeur de chaleur 5. Ce faisant, le fluide réfrigérant se condense et sort à l'état liquide du premier échangeur de chaleur 5, ce dernier étant alors un condenseur. Le fluide réfrigérant à l'état liquide est stocké dans le dispositif d'accumulation 6, et seul sa part liquide sort de ce dispositif d'accumulation 6 pour se diriger vers l'échangeur de chaleur interne principal 7. Ceci est rendu possible car la vanne principale 23 est en position ouverte, tandis que la première vanne 25 est fermée. La vanne secondaire 24 est également en position fermée.

Le fluide réfrigérant à l'état liquide traverse la première passe 8 de l'échangeur de chaleur interne principal 7 et passe dans l'organe de détente 9. Dans ce mode de fonctionnement, cet organe de détente 9 est inopérant sur l'état du fluide réfrigérant. Il est donc totalement passant. Le fluide réfrigérant circule dans le deuxième échangeur de chaleur 10 à l'état liquide et il subit un sous-refroidissement forcé, c'est-à-dire un abaissement de sa température en dessous de sa température de condensation. Ce sous-refroidissement forcé est opéré grâce au flux d'air extérieur 19 qui traverse le deuxième échangeur de chaleur 10. En sortant du deuxième échangeur de chaleur 10, le fluide réfrigérant passe de la branche principale 14 à la première branche 15, au niveau du premier point de raccordement 28, puis traverse le clapet anti-retour 34.

Le fluide réfrigérant à l'état liquide traverse ensuite la première passe 38 du premier échangeur de chaleur interne 36 et rejoint le premier dispositif de détente 16, à l'intérieur duquel il subit une détente. Le fluide réfrigérant se vaporise ensuite en traversant le troisième échangeur de chaleur 17, ce dernier étant traversé par le flux d'air intérieur 18 envoyé dans l'habitacle. C'est ainsi que ce refroidissement de l'habitacle est opéré.

Le fluide réfrigérant à l'état gazeux sort ensuite du troisième échangeur de chaleur 17 et parcourt la seconde passe 39 du premier échangeur de chaleur interne 36. Un transfert de calories se produit entre le fluide réfrigérant à l'état liquide présent dans la première passe 38 et le fluide réfrigérant à l'état gazeux présent dans la seconde passe 39 du premier échangeur de chaleur interne 36. Le fluide réfrigérant qui sort de la seconde passe 39 du premier échangeur de chaleur interne 36 rejoint enfin une entrée du dispositif de compression 4 pour qu'un nouveau cycle thermodynamique puisse prendre place dans le circuit de fluide réfrigérant 2.

Le deuxième dispositif de détente 21 est en position fermée, si bien que le quatrième échangeur de chaleur 22 est inopérant.

Du côté de la boucle de liquide caloporteur 3, la pompe 13 est à l'arrêt, si bien qu'il n'existe pas de circulation de liquide caloporteur dans la première portion de la boucle de liquide caloporteur entre le premier échangeur de chaleur 5 et le premier échangeur thermique 12. En revanche, le moyen de mise en circulation 48 est actif et fait circuler le liquide caloporteur dans la seconde portion de la boucle de liquide caloporteur entre le premier échangeur de chaleur 5 et le deuxième échangeur thermique 35, de sorte à décharger les calories dans le flux d'air extérieur 19.

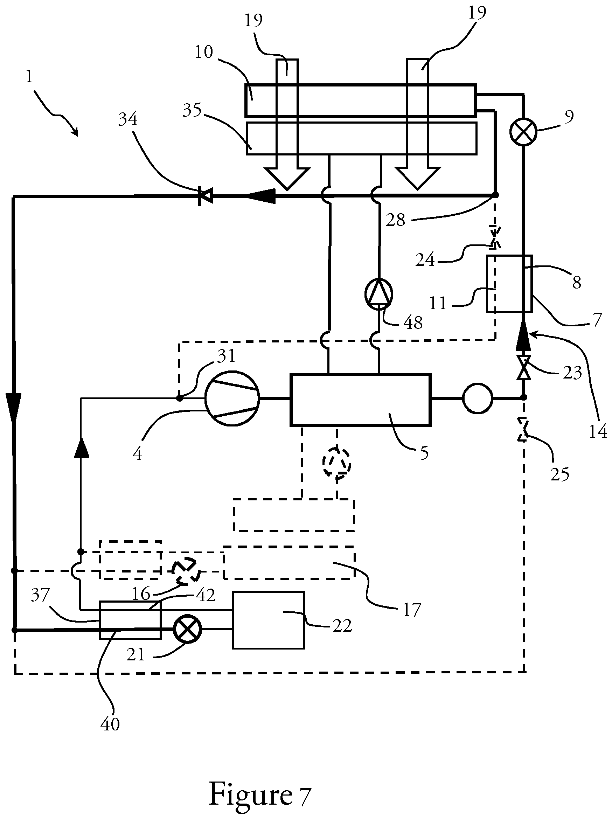

La figure 7 illustre un mode de fonctionnement correspondant à un refroidissement d'un composant d'une chaîne de traction électrique du véhicule. Un tel composant est par exemple un moteur électrique, un dispositif de stockage d'énergie électrique ou encore un module électronique de puissance.

Le comportement du fluide réfrigérant dans la branche principale 14 est identique à celui de la figure 6, et on se reportera à la description de cette figure pour en connaître le descriptif. Ce mode de fonctionnement diffère de celui de la figure 6 en ce que le premier dispositif de détente 16 est placé dans une position fermée, interdisant toute circulation de fluide réfrigérant dans le troisième échangeur de chaleur 17.

La deuxième branche 20 est en revanche active, en ce sens que le quatrième échangeur de chaleur 22 fonctionne comme un évaporateur. Le fluide réfrigérant à l'état liquide traverse la première passe 40 du deuxième échangeur de chaleur interne 37 et rejoint le deuxième dispositif de détente 21, à l'intérieur duquel il subit une détente. Le fluide réfrigérant se vaporise ensuite en traversant le quatrième échangeur de chaleur 22, ce dernier étant traversé par un liquide additionnel qui échange thermiquement avec l'un ou l'autre des composants de la chaîne de traction électrique. C'est ainsi que le refroidissement de ce composant est opéré.

Le fluide réfrigérant à l'état gazeux sort ensuite du quatrième échangeur de chaleur 22 et parcourt la seconde passe 42 du deuxième échangeur de chaleur interne 37. Un transfert de calories se produit entre le fluide réfrigérant à l'état liquide présent dans la première passe 40 et le fluide réfrigérant à l'état gazeux présent dans la seconde passe 42 du deuxième échangeur de chaleur interne 37. Le fluide réfrigérant qui sort de la seconde passe 42 du deuxième échangeur de chaleur interne 37 rejoint enfin l'entrée du dispositif de compression 4 pour qu'un nouveau cycle thermodynamique puisse prendre place dans le circuit de fluide réfrigérant 2.

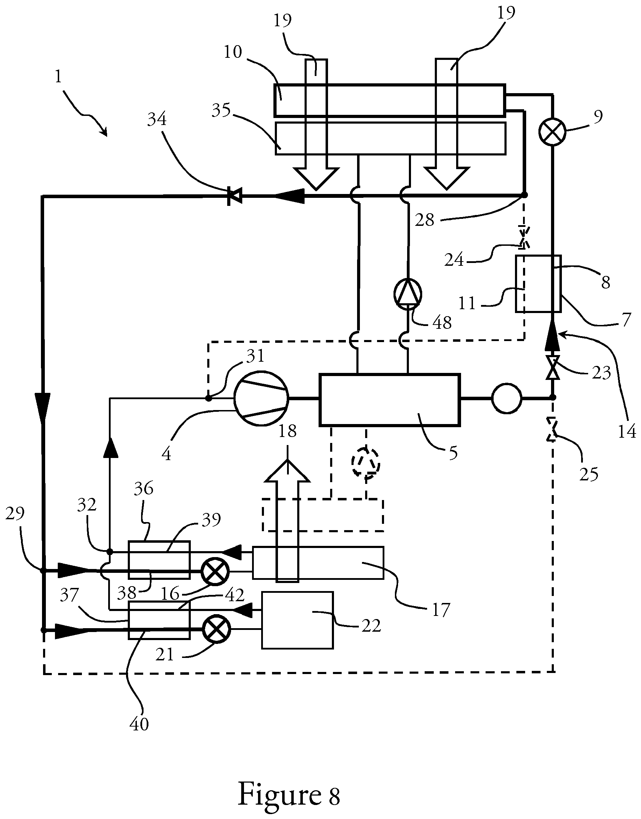

La figure 8 illustre un mode de fonctionnement correspondant à une combinaison du mode de fonctionnement de la figure 6 avec le mode de fonctionnement de la figure 7. Ce mode de fonctionnement de la figure 8 met en œuvre simultanément un refroidissement de l'habitacle du véhicule et un refroidissement d'un composant de la chaîne de traction électrique du véhicule. Cette situation peut se produire par exemple quand le véhicule est en phase de charge rapide, avec des conditions de températures extérieures élevées.

Le comportement du fluide réfrigérant dans la branche principale 14 est identique à celui des figures 6 et 7, et on se reportera à la description de ces figures pour en connaître le descriptif.

Dans le cas de la figure 8, la première branche 15 et la deuxième branche 20 sont actives, en ce sens que le troisième échangeur de chaleur 17 et le quatrième échangeur de chaleur 22 fonctionnent simultanément en tant qu'évaporateur.

Au niveau du deuxième point de raccordement 29, le fluide réfrigérant se sépare et circule dans chacun des échangeurs de chaleur interne 36, 37. Le premier dispositif de détente 16 et le deuxième dispositif de détente 21 mettent en œuvre une détente du fluide réfrigérant, ce dernier venant ensuite se vaporiser dans le troisième échangeur de chaleur 17 et dans le quatrième échangeur de chaleur 22.

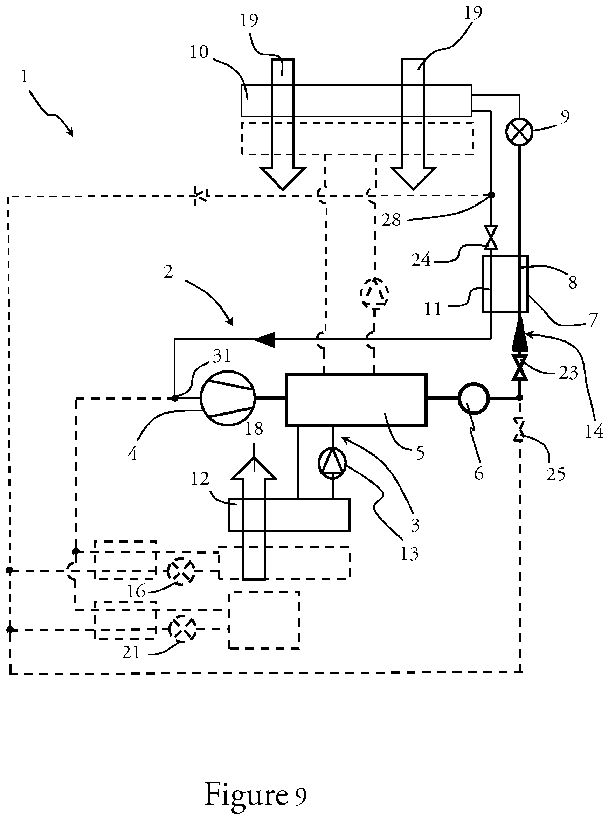

Le mode de fonctionnement de la figure 9 est un mode appelé « pompe à chaleur », où le circuit de fluide réfrigérant 2 et la boucle de liquide caloporteur 3 se combinent en vue de chauffer le flux d'air intérieur 18.

Le premier échangeur de chaleur 5 décharge les calories générées par le dispositif de compression 4 dans le liquide caloporteur. La pompe 13 est active et le liquide caloporteur chaud peut alors rejoindre le premier échangeur thermique 12 et chauffer le flux d'air intérieur 18 envoyé dans l'habitacle. Le fluide réfrigérant est alors condensé et sa phase liquide est stockée dans le dispositif d'accumulation 6. Le fluide réfrigérant à l'état liquide traverse la première passe 8 de l'échangeur de chaleur interne principal 7 et rejoint l'organe de détente 9.

Cet organe de détente 9 génère une détente du fluide réfrigérant, qui se vaporise en traversant le deuxième échangeur de chaleur 10 qui utilisé ici comme un évaporateur. En sortie du deuxième échangeur de chaleur 10, le fluide réfrigérant traverse la seconde passe 11 de l'échangeur de chaleur interne principal 7 et un transfert de calories prend place entre ces deux passes. Les performances thermiques du circuit de fluide réfrigérant 2 sont ainsi améliorées en mode pompe à chaleur par l'existence de cet échangeur de chaleur interne principal 7.

La vanne secondaire 24 est placée en position ouverte, si bien que le fluide réfrigérant qui sort de la deuxième passe 11 de l'échangeur de chaleur interne principal 7 retourne au dispositif de compression 4 pour mettre en œuvre un nouveau cycle thermodynamique.

La première vanne 25, le premier dispositif de détente 16 et le deuxième dispositif de détente 21 sont placés dans une position d'arrêt, interdisant toute circulation du fluide réfrigérant en leur sein. Le moyen de mise en circulation 48 du liquide caloporteur est également mis à l'arrêt, empêchant toute circulation du liquide caloporteur entre le premier échangeur de chaleur 5 et le deuxième échangeur thermique 35.

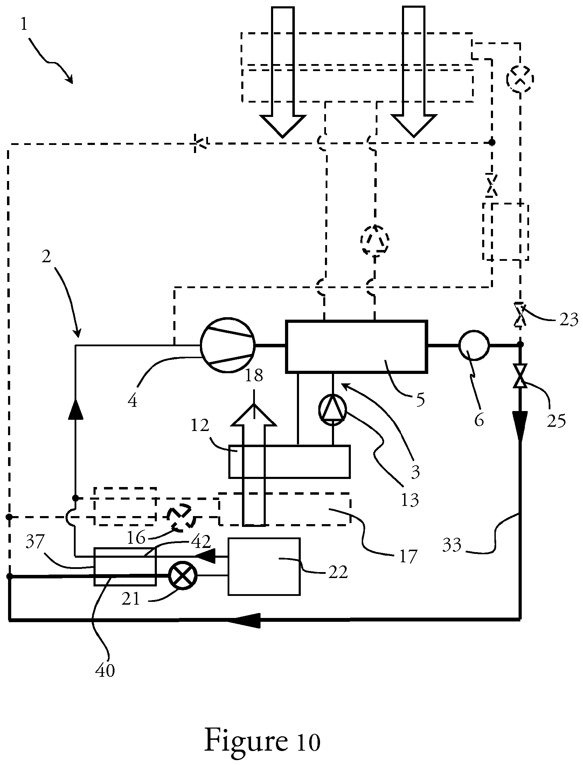

La figure 10 illustre un mode de fonctionnement dit de chauffage de l'habitacle, où une énergie provenant de la chaîne de traction électrique est mise à profit pour mettre en œuvre le cycle thermodynamique qui prend place dans le circuit de fluide réfrigérant 2. Ce mode de fonctionnement permet ainsi de chauffer le flux d'air intérieur 18.

Pour ce faire, le premier échangeur de chaleur 5 décharge les calories générées par le dispositif de compression 4 dans le liquide caloporteur. La pompe 13 est active et le liquide caloporteur chaud peut alors rejoindre le premier échangeur thermique 12, et ainsi chauffer le flux d'air intérieur 18 envoyé dans l'habitacle. Le fluide réfrigérant est alors condensé et sa phase liquide est stockée dans le dispositif d'accumulation 6.

La vanne principale 23 est fermée, bloquant ainsi toute circulation de fluide réfrigérant vers l'échangeur de chaleur interne principal 7. La première vanne 25 est en position ouverte, autorisant une circulation de fluide réfrigérant dans la canalisation 33. Le deuxième dispositif de détente 21 est ouvert, et il génère une détente du fluide réfrigérant. La deuxième branche 20 est ainsi active, en ce sens que le quatrième échangeur de chaleur 22 fonctionne comme un évaporateur. Le fluide réfrigérant à l'état liquide traverse la première passe 40 du deuxième échangeur de chaleur interne 37 et rejoint le deuxième dispositif de détente 21. Le fluide réfrigérant se vaporise ensuite en traversant le quatrième échangeur de chaleur 22, ce dernier étant traversé par le liquide additionnel qui échange thermiquement avec l'un ou l'autre des composants de la chaîne de traction électrique. C'est ainsi que des calories sont récupérées sur la chaîne de traction électrique et exploitées pour mettre en œuvre la phase d'évaporation du cycle thermodynamique.

La vanne secondaire 24 et le premier dispositif de détente 16 sont placés dans une position fermée, empêchant toute circulation de fluide réfrigérant au sein de la première branche 15.

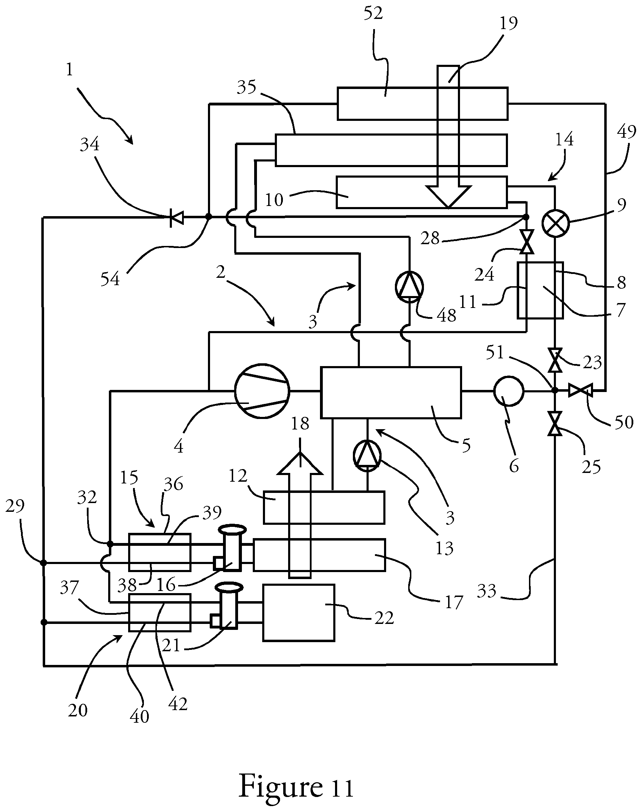

La figure 11 illustre un quatrième mode réalisation du système de traitement 1 selon l'invention. On se reportera au mode de réalisation illustré à la figure 3 pour la description des composants communs.

La première branche 15 et la deuxième branche 20 comprennent chacune respectivement un échangeur de chaleur interne et un dispositif de détente qui prend ici la forme d'un détendeur thermostatique à arrêt piloté identique à celui décrit à la figure 5.

Le mode de réalisation de la figure 11 diffère également du mode de réalisation de la figure 3 par la présence d'une conduite 49 dont la circulation du fluide réfrigérant est placée sous la dépendance d'une deuxième vanne 50. La conduite 49 est raccordée d'un côté à un sixième point de raccordement 51 disposé entre la vanne principale 23 et la première vanne 25, en sortie du dispositif d'accumulation 6. A l'autre extrémité, la conduite 49 est raccordée à un septième point de raccordement 54 situé entre le premier point de raccordement 28 et le deuxième point de raccordement 29.

La conduite 49 contourne une partie de la branche principale 14 qui comporte l'échangeur de chaleur interne principal 7, l'organe de détente 9 et le deuxième échangeur de chaleur 10. La conduite 49 comprend par ailleurs un cinquième échangeur de chaleur 52 agencé pour être traversé par le flux d'air extérieur 19 à l'habitacle du véhicule.

Selon ce quatrième mode de réalisation, le flux d'air extérieur 19 traverse successivement et selon cet ordre : le cinquième échangeur de chaleur 52, le deuxième échangeur thermique 35 et le deuxième échangeur de chaleurio.

Ce quatrième mode de réalisation permet de réduire les pertes de charge que subit le fluide réfrigérant lorsqu'il traverse l'échangeur de chaleur interne principal 7, l'organe de détente 9 et le deuxième échangeur de chaleur 10.

Le premier échangeur de chaleur 5 se comporte comme un condenseur. Lorsque la deuxième vanne 50 est ouverte et que la vanne principale 23 est fermée, le fluide réfrigérant poursuit son trajet au travers du cinquième échangeur de chaleur 52, où il subit un sous-refroidissement forcé. Le fluide réfrigérant ainsi refroidi rejoint le reste du circuit de fluide réfrigérant 2 au niveau du septième point de raccordement 54.

Le système de traitement thermique 1 selon le premier mode de réalisation, selon le deuxième mode de réalisation, selon le troisième mode de réalisation ou selon le quatrième mode de réalisation peut comprendre des moyens pour acquérir des informations relatives au circuit de fluide réfrigérant 2, à la boucle de liquide caloporteur 3, à l'un des composants de la chaîne de traction électrique, notamment le dispositif de stockage d'énergie électrique, ou à l'habitacle, et des moyens pour agir sur les composants de ce système de traitement thermique de manière à atteindre des consignes fixées, notamment des températures du flux d'air intérieur 18, du fluide réfrigérant ou des vitesses de rotation du dispositif de compression 4. Cette gestion du système de traitement thermique 1 peut être opérée par un dispositif de contrôle qui peut prendre la forme d'un boîtier ou d'une unité électronique. Ce dispositif de contrôle est avantageusement en capacité de piloter le dispositif de compression 4, les vannes, l'organe de détente et les dispositifs de détente, la pompe et/ou le moyen de mise en circulation du liquide caloporteur. Le dispositif de contrôle agit ainsi sur la vitesse de rotation de ce dispositif de compression, notamment quand il s'agit d'un compresseur à moteur électrique intégré et à cylindrée fixe.

On comprend de ce qui précède que la présente invention permet ainsi d'assurer simplement et à coûts optimisés le traitement thermique, par chauffage ou refroidissement, d'un composant de la chaîne de traction électrique, tel qu'une batterie ou un pack de batteries, et/ou de l'habitacle du véhicule. Les buts que s'est fixée l'invention sont atteints, en mettant à disposition un système de traitement thermique qui exécute avec des moyens réduits une fonction de chauffage de l'habitacle, une fonction de refroidissement de l'habitacle, une fonction de récupération d'énergie sur un composant de la chaîne de traction électrique, et une fonction de traitement thermique de l'un des composants de la chaîne de traction électrique du véhicule.

L'invention ne saurait toutefois se limiter aux moyens et configurations décrits et illustrés ici, et elle s'étend également à tous moyens ou configurations équivalentes et à toute combinaison techniquement opérant de tels moyens. En particulier, l'architecture du circuit de fluide réfrigérant ou de la boucle de liquide caloporteur peut être modifiée sans nuire à l'invention dans la mesure où il remplit les fonctionnalités décrites dans le présent document.

## Revendications

1. Système de traitement thermique (1) pour véhicule, comprenant un circuit de fluide réfrigérant (2) et une boucle de liquide caloporteur (3), la boucle de liquide caloporteur (3) comprenant au moins un échangeur thermique (12, 35) configuré pour dissiper des calories dans un flux d'air (18, 19), le circuit de fluide réfrigérant (2) comprenant, dans cet ordre et selon un sens de circulation du fluide réfrigérant dans le circuit de fluide réfrigérant (2), au moins un dispositif de compression (4), un premier échangeur de chaleur (5) qui couple thermiquement la boucle de liquide caloporteur (3) avec le circuit de fluide réfrigérant (2), un dispositif d'accumulation (6) du fluide réfrigérant, une première passe (8) d'un échangeur de chaleur interne (7), un organe de détente (9), un deuxième échangeur de chaleur (10) agencé pour être traversé par un flux d'air extérieur (19) à un habitacle du véhicule et une seconde passe (11) de l'échangeur de chaleur interne (7), et étant **caractérisé en ce que** le circuit de fluide réfrigérant (2) comprend une branche principale (14) et au moins une première branche (15) parallèle à la branche principale (14), cette branche principale (14) comprenant au moins le dispositif de compression (4), le premier échangeur de chaleur (5), le dispositif d'accumulation (6) du fluide réfrigérant, la première passe (8) de l'échangeur de chaleur interne (7), l'organe de détente (9), le deuxième échangeur de chaleur (10) et la seconde passe (11) de l'échangeur de chaleur interne (7), tandis que la première branche (15) comprend au moins un premier dispositif de détente (16) et un troisième échangeur de chaleur (17) agencé pour être traversé par un flux d'air intérieur (18) envoyé dans l'habitacle du véhicule, la première branche (15) étant raccordée à la branche principale (14) au niveau d'un premier point de raccordement (28) disposé entre une sortie du deuxième échangeur de chaleur (10) et une entrée de la seconde passe (11) de l'échangeur de chaleur interne (7) qui fait partie de la branche principale (14), la première branche (15) étant par ailleurs raccordée à un troisième point de raccordement (31) situé sur la branche principale (14) entre une sortie de la seconde passe (11) de l'échangeur de chaleur interne (7) de la branche principale (14) et une entrée du dispositif de compression (4).

2. Système selon la revendication 1, dans lequel l'organe de détente (9) est configuré pour prendre au moins une position inopérante à l'égard du fluide réfrigérant.

3. Système selon l'une des revendications précédentes, dans lequel le circuit de fluide réfrigérant (2) comprend au moins une deuxième branche (20) parallèle à la première branche (15), la deuxième branche (20) comprenant un deuxième dispositif de détente (21) et un quatrième échangeur de chaleur (22) agencé pour refroidir un fluide additionnel.

4. Système selon l'une des revendications précédentes, dans lequel le premier dispositif de détente (16) et/ou le deuxième dispositif de détente (21) sont configurés pour prendre au moins une position qui empêche toute circulation de fluide réfrigérant vers le troisième échangeur de chaleur (17), respectivement vers le quatrième échangeur de chaleur (22).

5. Système selon la revendication 3, dans lequel l'échangeur de chaleur interne (7) de la branche principale (14) est un échangeur de chaleur interne principal (7), le circuit de fluide réfrigérant (2) comprenant un échangeur de chaleur interne secondaire (26) commun à la première branche (15) et à la deuxième branche (20).

6. Système selon l'une quelconque des revendications 1 à 4, dans lequel l'échangeur de chaleur interne (7) de la branche principale (14) est un échangeur de chaleur interne principal (7), la première branche (15) comprenant un premier échangeur de chaleur interne (36).

7. Système selon l'une quelconque des revendications 1 à 4 ou 6, dans lequel l'échangeur de chaleur (7) de la branche principale (14) est un échangeur de chaleur interne principal (7), la deuxième branche (20) comprenant un deuxième échangeur de chaleur interne (37).

8. Système selon l'une quelconque des revendications précédentes, dans lequel l'échangeur thermique (12, 35) de la boucle de liquide caloporteur (3) est un radiateur (35) agencé pour être traversé par le flux d'air extérieur (19) à l'habitacle du véhicule.

9. Système selon l'une quelconque des revendications 1 à 7, dans lequel l'échangeur thermique (12, 35) de la boucle de liquide caloporteur (3) est un aérotherme (12) agencé pour être traversé par le flux d'air intérieur (18) envoyé dans l'habitacle du véhicule.

## Patentansprüche

1. Wärmebehandlungssystem (1) für ein Fahrzeug, umfassend einen Kältemittelkreis (2) und einen Wärmeträgerflüssigkeitskreislauf (3), wobei der Wärmeträgerflüssigkeitskreislauf (3) mindestens einen Wärmetauscher (12, 35) umfasst, der dazu ausgestaltet ist, Wärme in einen Luftstrom (18, 19) abzuleiten, wobei der Kältemittelkreis (2), in dieser Reihenfolge und entlang einer Strömungsrichtung des Kältemittels in dem Kältemittelkreis (2), mindestens eine Verdichtungsvorrichtung (4), einen ersten Wärmetauscher (5), der den Wärmeträgerflüssigkeitskreislauf (3) thermisch mit dem Kältemittelkreis (2) koppelt, eine Speichervorrichtung (6) für das Kältemittel, einen ersten Durchgang (8) eines inneren Wärmetauschers (7), ein Entspannungsorgan (9), einen zweiten Wärmetauscher (10), der dazu eingerichtet ist, von einem Außenluftstrom (19) eines Fahrgastraums des Fahrzeugs durchströmt zu werden, und einen zweiten Durchgang (11) des inneren Wärmetauschers (7) umfasst, und **dadurch gekennzeichnet ist, dass** der Kältemittelkreis (2) einen Hauptzweig (14) umfasst und mindestens einen ersten Zweig (15), der zum Hauptzweig (14) parallel ist, wobei dieser Hauptzweig (14) mindestens die Verdichtungsvorrichtung (4), den ersten Wärmetauscher (5), die Speichervorrichtung (6) für das Kältemittel, den ersten Durchgang (8) des inneren Wärmetauschers (7), das Entspannungsorgan (9), den zweiten Wärmetauscher (10) und den zweiten Durchgang (11) des inneren Wärmetauschers (7) umfasst, während der erste Zweig (15) mindestens eine erste Entspannungsvorrichtung (16) und einen dritten Wärmetauscher (17) umfasst, der dazu eingerichtet ist, von einem Innenluftstrom (18) durchströmt zu werden, der in den Fahrgastraum des Fahrzeugs geleitet wird, wobei der erste Zweig (15) an den Hauptzweig (14) an einer ersten Anschlussstelle (28) angeschlossen ist, die zwischen einem Auslass des zweiten Wärmetauschers (10) und einem Einlass des zweiten Durchgangs (11) des inneren Wärmetauschers (7) angeordnet ist, der zum Hauptzweig (14) gehört, wobei der erste Zweig (15) im Übrigen an eine dritte Anschlussstelle (31) angeschlossen ist, die am Hauptzweig (14) zwischen einem Auslass des zweiten Durchgangs (11) des inneren Wärmetauschers (7) des Hauptzweigs (14) und einem Einlass der Verdichtungsvorrichtung (4) gelegen ist.

2. System nach Anspruch 1, bei dem das Entspannungsorgan (9) dazu ausgestaltet ist, mindestens eine unwirksame Stellung gegenüber dem Kältemittel einzunehmen.

3. System nach einem der vorhergehenden Ansprüche, bei dem der Kältemittelkreis (2) mindestens einen zweiten Zweig (20) umfasst, der parallel zum ersten Zweig (15) ist, wobei der zweite Zweig (20) eine zweite Entspannungsvorrichtung (21) und einen vierten Wärmetauscher (22) umfasst, der dazu eingerichtet ist, ein zusätzliches Mittel zu kühlen.

4. System nach einem der vorhergehenden Ansprüche, bei dem die erste Entspannungsvorrichtung (16) und/oder die zweite Entspannungsvorrichtung (21) dazu ausgestaltet sind, mindestens eine Stellung einzunehmen, die jedes Strömen des Kältemittels zu dem dritten Wärmetauscher (17) beziehungsweise zu dem vierten Wärmetauscher (22) verhindert.

5. System nach Anspruch 3, bei dem der innere Wärmetauscher (7) des Hauptzweigs (14) ein innerer Hauptwärmetauscher (7) ist, wobei der Kältemittelkreis (2) einen inneren Nebenwärmetauscher (26) umfasst, der dem ersten Zweig (15) und dem zweiten Zweig (20) gemein ist.

6. System nach einem der Ansprüche 1 bis 4, bei dem der innere Wärmetauscher (7) des Hauptzweigs (14) ein innerer Hauptwärmetauscher (7) ist, wobei der erste Zweig (15) einen ersten inneren Wärmetauscher (36) umfasst.

7. System nach einem der Ansprüche 1 bis 4 oder 6, bei dem der Wärmetauscher (7) des Hauptzweigs (14) ein innerer Hauptwärmetauscher (7) ist, wobei der zweite Zweig (20) einen zweiten inneren Wärmetauscher (37) umfasst.

8. System nach einem der vorhergehenden Ansprüche, bei dem der Wärmetauscher (12, 35) des Wärmeträgerflüssigkeitskreislaufs (3) ein Kühler (35) ist, der dazu eingerichtet ist, von dem Außenluftstrom (19) des Fahrgastraums des Fahrzeugs durchströmt zu werden.

9. System nach einem der Ansprüche 1 bis 7, bei dem der Wärmetauscher (12, 35) des Wärmeträgerflüssigkeitskreislaufs (3) ein Lufterhitzer (12) ist, der dazu eingerichtet ist, von dem Innenluftstrom (18) durchströmt zu werden, der in den Fahrgastraum des Fahrzeugs geleitet wird.

## Claims

1. Thermal management system (1) for a vehicle, comprising a refrigerant circuit (2) and a loop (3) for heat-transfer liquid, the loop (3) for heat-transfer liquid comprising at least one heat exchanger (12, 35) configured to dissipate heat energy into an air flow (18, 19), the refrigerant circuit (2) comprising, in this order and in a direction in which the refrigerant circulates in the refrigerant circuit (2), at least one compression device (4), a first heat exchanger (5) which thermally couples the loop (3) for heat-transfer liquid to the refrigerant circuit (2), a refrigerant accumulation device (6), a first pass (8) of an internal heat exchanger (7), an expansion member (9), a second heat exchanger (10) designed to have passing through it a flow (19) of air external to an interior of the vehicle and a second pass (11) of the internal heat exchanger (7)and **characterized in that** the refrigerant circuit (2) comprises a main leg (14) and at least a first leg (15) parallel to the main leg (14), this main leg (14) comprising at least the compression device (4), the first heat exchanger (5), the refrigerant accumulation device (6), the first pass (8) of the internal heat exchanger (7), the expansion member (9), the second heat exchanger (10) and the second pass (11) of the internal heat exchanger (7), whereas the first leg (15) comprises at least a first expansion device (16) and a third heat exchanger (17) designed to have passing through it an interior air flow (18) sent into the interior of the vehicle, the first leg (15) being connected to the main leg (14) at a first connection point (28) positioned between an outlet of the second heat exchanger (10) and an inlet of the second pass (11) of the internal heat exchanger (7) which forms part of the main leg (14), the first leg (15) also being connected to a third connection point (31) situated on the main leg (14) between an outlet of the second pass (11) of the internal heat exchanger (7) of the main leg (14) and an inlet of the compression device (4).

2. System according to Claim 1, wherein the expansion member (9) is configured to adopt at least one position that is inoperative with respect to the refrigerant.

3. System according to one of the preceding claims, wherein the refrigerant circuit (2) comprises at least a second leg (20) parallel to the first leg (15), the second leg (20) comprising a second expansion device (21) and a fourth heat exchanger (22) designed to cool an additional fluid.

4. System according to one of the preceding claims, wherein the first expansion device (16) and/or the second expansion device (21) are configured to adopt at least a position that prevents any circulation of refrigerant toward the third heat exchanger (17) or toward the fourth heat exchanger (22), respectively.

5. System according to Claim 3, wherein the internal heat exchanger (7) of the main leg (14) is a main internal heat exchanger (7), the refrigerant circuit (2) comprising a secondary internal heat exchanger (26) common to the first leg (15) and to the second leg (20).

6. System according to any one of Claims 1 to 4, wherein the internal heat exchanger (7) of the main leg (14) is a main internal heat exchanger (7), the first leg (15) comprising a first internal heat exchanger (36).

7. System according to any one of Claims 1 to 4 or 6, wherein the heat exchanger (7) of the main leg (14) is a main internal heat exchanger (7), the second leg (20) comprising a second internal heat exchanger (37).

8. System according to any one of the preceding claims, wherein the heat exchanger (12, 35) of the loop (3) for heat-transfer liquid is a radiator (35) designed to have passing through it the flow (19) of air external to the interior of the vehicle.

9. System according to any one of Claims 1 to 7, wherein the heat exchanger (12, 35) of the loop (3) for heat-transfer liquid is a unit heater (12) designed to have passing through it the flow (18) of interior air sent into the interior of the vehicle.
